# EUROPEAN PATENT APPLICATION

(11) **EP 1 785 179 A1**
(43) Date of publication of application: **16.05.2007**
(21) Application number: 06020203.3
(22) Date of filing: 27.09.2006
(51) Int. Cl.: B01D 29/90, B01D 29/35

(54) **Selfcleaning static filter**

(30) Priority: 09.11.2005 IT RE20050124
(71) Applicant: Braglia SRL, 42029 Masone RE (IT)
(72) Inventor: Braglia, Vitaliano, 42100 Gavasseto-Reggio Emilia (IT)
(74) Representative: Gotra, Stefano

(57) **Abstract**

The static filter 1 is defined by a main body (2) which is superiorly open and exhibits an inlet (3) and at least a first outlet (4) and a second outlet (4'). The main body (2) is superiorly closed by a bell (5) internally containing a net body (7), which net body (7) is substantially cylindrically shaped and intercepts inletting fluid. The filter (1) also exhibits a tubular body (8) connected to the inlet (3), which body (8) is entirely surrounded by the net body (7) and can convey the fluid in inlet in proximity of the upper vault (5a) of the bell (5).

## Description

The invention relates to a static filter having a self-cleaning action.

The device is applicable to the agricultural sector, where it can be mounted for example on nebulizers or spray groups, and more generally in industrial sectors which operate with fluids to be filtered.

Known filters presently on the market can be grouped into two major families: static filters and self-cleaning filters.

Static filters are defined by a main body provided with an inlet, which entrains the fluid to be filtered into a filtration chamber connected to the main body and containing a net filter having two outlets, the first for the filtered fluid and the second for the impurities in a liquid solution.

The conformation of the first example of prior art includes a positioning of the geometric axis of the filtration chamber which is angled with respect to the geometric axis of the inlet.

This arrangement requires the use of a deflecting body, generally a protuberance of the main body internally of the filtration chamber, which directs the fluid in inlet into the net filter, which is generally shaped as a truncated cylinder.

The main disadvantage of this type of filter is connected with the frequent need for maintenance.

As far as the larger impurities are concerned, the filtration chamber is provided with a faucet valve.

Smaller-sized impurities can block the filtering body.

The cleaning operation is done manually and first requires that the filter be extracted from the main body.

This operation can be effected only by dismounting the filtration chamber from the main body, thus gaining access to the filter.

To solve this problem, self-cleaning filters were developed.

These devices are provided with a substantially trunco-cylindrical body having a transversal development and internally containing the net filter; they also include an inlet and two outlets.

The inlet, which is incident to the lateral wall of the cylindrical body, directs the fluid in inlet against the net filter, the first outlet, being arranged parallel to the inlet and located downstream of the filter, receives the filtered fluid and the second outlet, located at the bottom of the cylindrical body and enveloped by the net filter, discharges the impurities from the bottom of the cylindrical body in a liquid solution.

The self-cleaning function is obtained, in a preferred embodiment, by a pin, concentric to the filter, which is provided with a plurality of blades that scrape the inside wall of the filter.

The pin is powered by a gear reducer connected externally of the cylindrical body.

These devices are disadvantageously unwieldy and un able to gather together in one single body all the functions which for ever-increasing reasons of compactness are becoming strategically important in the installation of filter-valve-manometer groups, as well as groups including other applications.

The main aim of the present invention is to provide a static filter which integrates the self-cleaning functions without having negative effects on the size of the filter.

A further aim of the present invention is to realise a cleaning function without any need to motorise the filter.

These aims and advantages and others besides are all achieve by the invention as it is characterised in the claims that follow.

Further characteristics and advantages of the present invention will better emerge from the detailed description that follows, of a preferred but not exclusive embodiment of the invention, illustrated purely by way of nonlimiting example in the accompanying figures of the drawings, in which:
Figure 1 is an exploded perspective view of a static filter with a self-cleaning action made according to the invention;
figure 2 is a front view in section of the static filter of the invention;
figure 3 is a schematic view of the static filter with self-cleaning action.

With reference to the figures of the drawings, 1 denotes in its entirety a self-cleaning filter.

The self-cleaning filter 1 exhibits a main body 2, into which a fluid enters and from which the fluid exits, a net body 7 for the filtering operation, enclosed by a bell 5, defining a filtering chamber and superiorly closing the main body 2.

The main body 2, superiorly open, exhibits an inlet 3, supplied by a fluid delivery pump, and at least a first outlet 4 and a second outlet 4'.

The bell 5, which exhibits a trunco-cylindrical shape, with the upper vault 5a facing downwards, is stably connected to the main body 2 by means of a threaded collar 6.

The net body 7, which intercepts the fluid coming from the inlet 3, exhibits a lower portion 7a coupled to the main body 2 and an upper portion 7b coupled to the bell 5, and is substantially cylindrical.

A tubular body 8 is stably coupled to the main body 2 at the inlet 3.

The tubular body 8, which is entirely enveloped by the net body 7, exhibits a lower end 8a which is connected to the main body, and an upper end 8b which terminates in proximity of the upper vault 5a of the bell 5.

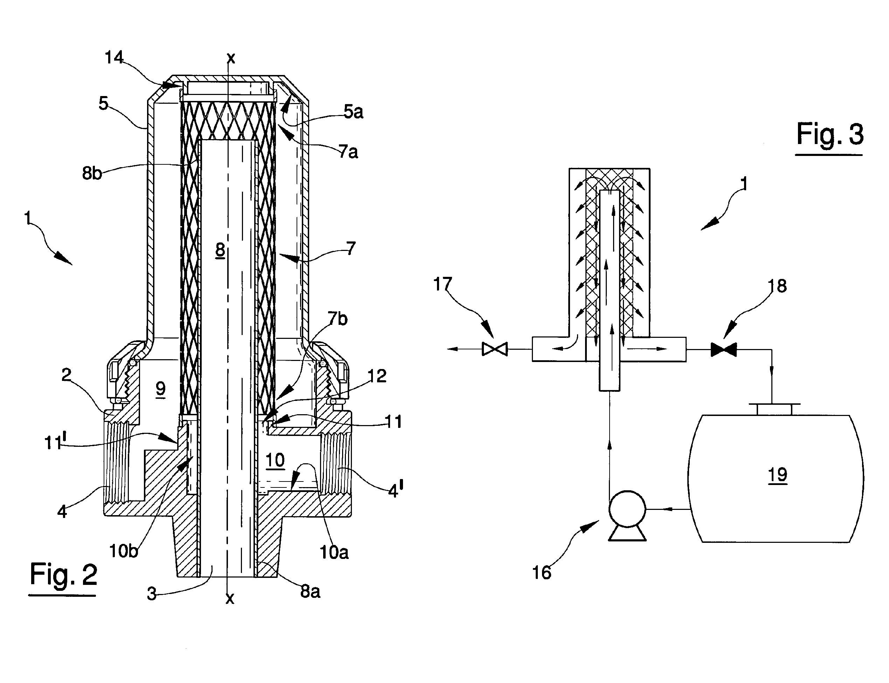

As can be seen in figure 2, the main body 2 inferiorly exhibits an inlet 3, which develops along a central axis X-X, a first chamber 9, communicating with the first outlet 4, and a second chamber 10, communicating with the second outlet 4' and the inside of the net body 7 at the base thereof.

In more detail, the second chamber 10 is defined by a first tract 10a, communicating with the second outlet 4' and a second tract 10b overlying the inlet 3 and downstream of and separate from the first chamber 9, by means of a separating wall 11, and upstream of and communicating with the inside of the net body 7, through an opening 21 afforded on the wall 11, the wall being concentric to the axis X-X.

The second tract 10b develops along the axis X-X.

By locating the tubular body 8 internally of the inlet 3 a direct by-pass between the inlet 3 and the second chamber 4' is avoided.

The tubular body 8, which develops along the axis X-X, crosses the second chamber 10 and opens, through the opening 12, in the upper part of the bell 5 internally of the net body 7.

A first seating 13 is present at the periphery of the opening 12, which seating houses the lower portion 7a of the net body 7.

The bell 5, which delimits the first chamber 9, internally exhibits, on the upper vault 5a opposite the open zone, a preferably ring-shaped second seating 14.

The upper portion 7b of the net body 7 is coupled to and envelops the second seating 14.

The main body 2 exhibits the first outlet 4 and the second outlet 4' on two preferably opposite sides thereof.

A hole 15 communicating with the first chamber 9 is present on at least a side which is different from the two sides mentioned above.

The chamber 9 defines internally of the main body 2 an annular space surrounding the inlet 3 and interrupted on a portion thereof by the second chamber 10 which is united to the inlet 3.

Figure 3 illustrates the integrated hydraulic circuit of the static filter with self-cleaning action 1.

16 denotes a pump which sends the fluid to the inlet 3, and 17and 18 denote a first valve and a second valve.

The first valve 17 connects the filter to a user, by sending the filtered fluid thereto, while the second valve 18 discharges the impurities to a cistern 19.

The device operates as follows.

The fluid to be filtered is removed from the cistern 19 by the pump and sent to the inlet 3.

The tubular body 8 transports the fluid from the inlet 3 into the first chamber 9, terminating at the upper vault 5a of the bell 5.

A flow of fluid is created, descending towards the first outlet 4 and the second outlet 4'.

A considerable part of the fluid outletting from the tubular body 8 crosses the net body 7 and, once filtered, exits from the first outlet 4 through the chamber 9.

Another part of the fluid flows internally of the lateral wall of the net body 7, leading the impurities which were blocking the net body 7 to the cistern 19, through the second outlet 4'.

Consequently the quantity of fluid which does not cross the net body generates the self-cleaning action, in continuous recycling which is regulated by the valve 18.

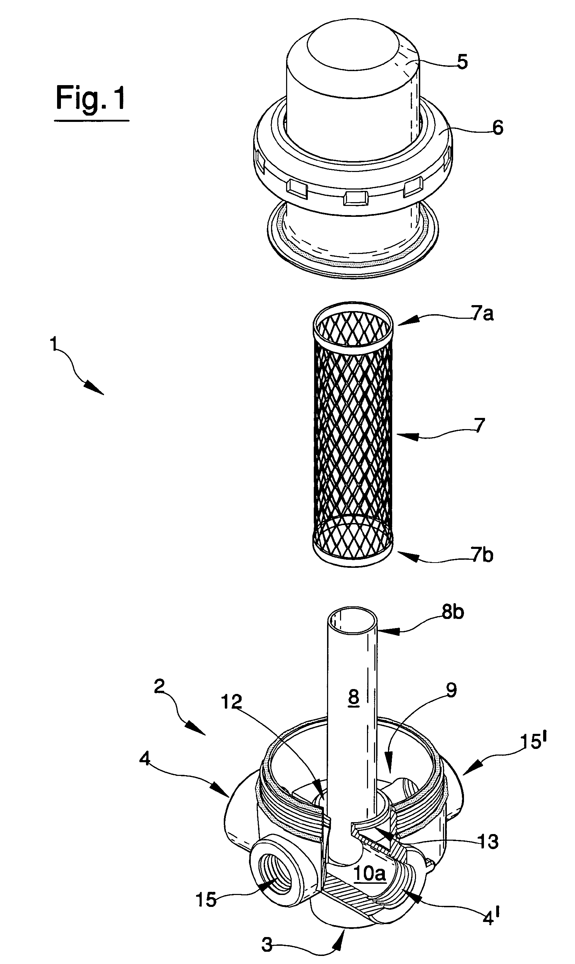

As shown in figure 2, the annular conformation of the first chamber 9 enables further passage holes to be obtained, illustrated in figure 1 with the first hole 15 and a second hole 15', to facilitate hydraulic connection with other users, such as for example another valve and a manometer, without having negative effects on the volume of the filter.

A further advantage of the present device is the coplanar situation of the hydraulic attachments, all located at the abse of the main body 2.

## Claims

1. A static filter having a self-cleaning action, comprising:
- a main body (2) which is superiorly open and exhibits an inlet (3), supplied by a fluid delivery pump, and at least a first outlet (4) and a second outlet (4');
- a bell (5), exhibiting an upper vault (5) facing towards the main body (2) and superiorly closing the main body (2) and connected thereto;
- a substantially cylindrically shaped net body (7), which intercepts the fluid in inlet and exhibits a lower portion (7a) coupled to the main body (2) and an upper portion (7b) coupled to the bell (5);
**characterised in that** it comprises a tubular body (8) exhibiting a lower end (8a) connected to the inlet (3) and an upper end (8b) terminating in proximity of the upper vault of the bell (5), the tubular body (8) being entirely enveloped by the net body (7).

2. The filter of claim 1, **characterised in that** the main body (2) comprises:
- an inlet (3) developing along an axis X-X;
- a first chamber (9) communicating with the first outlet (4);
- a second chamber (10), communicating with the second outlet (4') and with the internal zone of the net body (7), defined by a first tract (10a) communicating with the second outlet (4') and a second tract (10b) overlying the inlet (3) and being downstream thereof separated from the first chamber (9) by means of a separating wall (11), and upstream thereof communicating with the internal zone of the net body (7), through an opening (12) afforded in the separating wall (11).

3. The filter of claim 2, **characterised in that** the second tract (10b) develops along the axis X-X.

4. The filter of claim 2, **characterised in that** the lower end (8a) of the tubular body (8) avoids a direct by-pass between the inlet (3) and the second chamber (4').

5. The filter of claim 2, **characterised in that** the tubular body (8) crosses the second chamber (10) and terminates in the upper part of the bell (5) internally of the net body (7).

6. The filter of claim 2, **characterised in that** the separating wall (11) exhibits a first seating (13), fashioned in the periphery of the opening (12), for housing the lower portion (7a) of the net body (7).

7. The filter of claim 1, **characterised in that** the bell (5) is connected to the main body (2) by means of a threaded collar (6).

8. The filter of claim 2, **characterised in that** the bell (5) internally thereof delimits the first chamber (9).

9. The filter of claim 1, **characterised in that** the bell (5) exhibits internally thereof, at the position of the upper vault (5a), a second seating (14) which is preferably ring-shaped.

10. The filter of claim 9, **characterised in that** the net body (7) exhibits the upper portion (7b) thereof engaged to the second seating (14), the upper portion (7b) enveloping the second seating (14).

11. The filter of claim 2, **characterised in that** the first chamber (9) defines, internally of the main body (2), an annular space surrounding the inlet (3), which annular space is interrupted on a portion thereof by the second chamber (10) which is united to the inlet (3).

12. The filter of claim 11, **characterised in that** the main body (2) exhibits on two opposite sides thereof respectively a first outlet (4) and a second outlet (4').

13. The filter of claim 12, **characterised in that** the main body (2) exhibits on at least another side thereof, different from the two opposite sides thereof, a hole (15) which communicates with the first chamber (9).

14. The filter of claim 1, **characterised in that** the inlet (3) is afforded at a lower height than the first outlet (4) and the second outlet (4').
